# EUROPEAN PATENT SPECIFICATION

(11) **EP 1 532 002 B1**
(45) Date of publication and mention of the grant of the patent: **05.11.2008**
(21) Application number: 03791698.8
(22) Date of filing: 19.08.2003
(51) Int. Cl.: B42D 15/00, G07D 7/00

(54) **DURABLE SECURITY DEVICES AND SECURITY ARTICLES EMPLOYING SUCH DEVICES**
DAUERHAFTE SICHERHEITSVORRICHTUNGEN UND SICHERHEITSARTIKEL ZUR ANWENDUNG SOLCHER VORRICHTUNGEN
DISPOSITIFS DE SECURITE DURABLES ET ARTICLES DE SECURITE UTILISANT CES DISPOSITIFS

(30) Priority: 28.08.2002 US 407220 P
(43) Date of publication of application: 25.05.2005
(73) Proprietor: CRANE & CO., INC., Dalton Massachusetts 01226 (US); Technical Graphics, Inc., Milford, NH 03055 (US)
(72) Inventor: COTE, Paul, F., Hollis, NH 03049 (US); CRANE, Timothy, T., Windsor, MA 01270 (US); CURDO, Stephen, B., Hollis, NH 03049 (US); GARTNER, Gerald, J., Hollis, NH 03049 (US); LEEDS, Daniel, G., Manchester, NH 03109 (US); PAGE, Brian, C., Manchester, NH 03102 (US); WOLPERT, Gary, R., Mason, NH 03048 (US)
(74) Representative: Bone, Alexander Marcus Thomas
(86) International application number: PCT/US2003/025983
(87) International publication number: WO 2004/020218

(56) References cited:
- US-A- 5 486 022
- US-A- 5 803 503

## Description

### FIELD OF THE INVENTION

The present invention generally relates to security devices that are resistant to chemical attack and mechanical degradation and to security articles having at least one such security device partially or fully embedded therein and/or mounted thereon.

### BACKGROUND OF THE INVENTION

It is known that secure documents or instruments may be rendered less susceptible to forgery or counterfeiting by including security features in various forms within the body of the document. In fact, the security or integrity of a document or instrument will increase with the number of separate and distinct security features that it employs.

Many security papers and other items of value include a security device or element, such as a security thread, disposed on or within the document (see for example US-A-5803503). The security device typically includes one or more security features, such as metallic, magnetic and/or luminescent security features that serve to authenticate the security paper and prevent or deter counterfeiting.

A common type of security thread includes metal-formed characters or indicia disposed on a plastic carrier substrate. Such threads, which are coated with a very thin (e.g., 300 to 500 angstrom) layer of metal, such as aluminum, and are then demetallized, display either: discrete metal characters as currently used in United States currency; negative or reverse-image characters as currently used in the new Euro currency; or a repeating pattern of isolated metal blocks containing negative or reverse-image characters as described in U.S. Patent No. 5,486,022 and as used in Indian and Venezuelan currencies. These threads are visually detectable in transmitted light by members of the public and may be machine detectable by conventional thread detectors that detect the presence or absence of conductive features on the threads. The repeating patterns of the threads described in U.S. Patent No. 5,486,022 and employed in Indian and Venezuelan currencies are machine readable as well as machine detectable.

Demetallized threads have well known advantages over printed security threads. Due to the presence of a reflective metal layer, beneficial optical effects are produced under circumstances where the thread is entirely buried in paper as well as when partially exposed as in the case of windowed thread. There are further advantages to the metallic layer when security threads are authenticated during banknote sorting. The presence of either a continuous metal layer or a specifically encoded patterned metal layer can be detected on the basis of conductivity.

A known disadvantage of demetallized threads is their susceptibility to corrosive effects during paper manufacturing and in circulating banknotes. More specifically, any metal extending to the edge of the thread, even when protected by a laminate or transparent coating, acts as a wick for chemicals that cause corrosion or degradation of the metal layer. As a consequence threads in banknotes exposed to even weak alkali solutions such as used in common household laundries may lose all or part of their metal layer via corrosion from the edges inward.

A need therefore exists for a security device that is resistant to chemical attack.

It is therefore an object of the present invention to provide such a durable security device.

It is a more particular object to provide a security device for use in security articles such as bank notes and the like, that matches or exceeds the durability of the security article.

It is another object of the present invention to provide a security article having at least one durable security device at least partially embedded therein and/or mounted thereon.

### SUMMARY

The present invention therefore provides a security device comprising:
(a) at least one support layer having a surface comprising a central longitudinal band or strip and opposing longitudinal borders;
(b) at least one information-bearing layer disposed on the central band or strip of the support layer surface; and
(c) at least one protective layer disposed on the information-bearing layer(s) and on the opposing longitudinal borders of the support layer surface,
wherein, the protective layer(s) is adhered to at least the opposing longitudinal borders of the support layer surface.

The present invention further provides a security article having at least one security device, as defined hereinabove, at least partially embedded therein and/or mounted thereon.

Other features and advantages of the invention will be apparent to one of ordinary skill from the following detailed description and accompanying drawings.

Unless otherwise defined, all technical and scientific terms used herein have the same meaning as commonly understood by one of ordinary skill in the art to which this invention belongs. All publications, patent applications, patents and other references mentioned herein are incorporated by reference in their entirety. In case of conflict, the present specification, including definitions, will control. In addition, the materials, methods, and examples are illustrative only and not intended to be limiting.

### BRIEF DESCRIPTION OF THE DRAWINGS

Particular features of the disclosed invention are illustrated by reference to the accompanying drawings in which:
FIGS. 1 to 8 are plan views of different embodiments of the information-bearing layer formed on the support layer surface of the inventive durable security device;
FIG. 9 is a cross-sectional end view of one embodiment of the durable security device of the present invention;
FIG. 10 is a cross-sectional side view of another embodiment of the inventive durable security device where the information-bearing layer is a discontinuous layer that extends across the entire length of the security device;
FIG. 11 is a cross-sectional side view of yet another embodiment of the present invention where two registered, discontinuous information-bearing layers extend across the entire length of the security device; and
FIG. 12 is an exploded, cross-sectional side view of yet another embodiment of the present invention where two support layers are used in constructing the durable security device of the present invention.

### DESCRIPTION OF THE PREFERRED EMBODIMENTS

The present invention serves to address the problem of providing a durable security device, one that is resistant to chemical attack and mechanical degradation. The solution to this problem resides in the discovery that sealing the support and protective layers along opposing longitudinal borders adjacent to the information-bearing layer will prevent corrosive and/or degrading materials from reaching the information-bearing layer through these sealed borders. As a result, the information conveyed by way of the information-bearing layer and thus the integrity of the security device is preserved.

In a preferred embodiment, at least a portion of the information-bearing layer is fully encapsulated by the support and protective layers, rendering this portion or layer and the information conveyed thereby, impervious to chemical attack.

The inventive security device will be described herein below mainly as a security thread used in association with banknotes. The invention, however, is not so limited. The durable security device of the present invention can be utilized in a variety of different forms (*e.g*., patches, stripes) with any document or means of identification for authentication purposes.

The support layer of the durable security device is a light-transmitting support layer that has a thickness ranging from about 8 to about 26 microns (preferably from about 10 to about 15 microns).

In a preferred embodiment, the support layer is formed using one or more essentially colorless polymers selected from the group of polyester, polypropylene, polyethylene, polyethylene terephthalate, and mixtures thereof. In a more preferred embodiment, the support layer is a polyester film.

In another preferred embodiment, the support layer is colored and/or luminescent and, in yet another preferred embodiment, the support layer provides adhesive properties to bond the security device into or onto paper.

The information-bearing layer(s) is either a continuous or discontinuous strip that is formed along the entire length of the support layer surface. The thickness of the information-bearing layer(s) ranges from about 0.001 to about 0.01 microns.

The information conveyed by the information-bearing layer(s) may be visually perceivable information (*e.g*., letters, numbers, symbols) and/or machine-detectable and optionally machine-readable information (*e.g*., a plurality of metal regions).

In a preferred embodiment, the information-bearing layer(s) is an opaque strip formed using materials selected from the group of aluminum (Al), chromium (Cr), cobalt (Co), copper (Cu), gold (Au), iron (Fe), nickel (Ni), silver (Ag), alloys of two or more of the aforementioned materials, and alloys that produce an opaque layer upon sputtering, vacuum deposition, plasma coating and the like. In a more preferred embodiment, the information-bearing layer(s) is formed using aluminum. In another more preferred embodiment, the information-bearing layer(s) is formed using a magnetic metal such as nickel or a nickel/cobalt alloy.

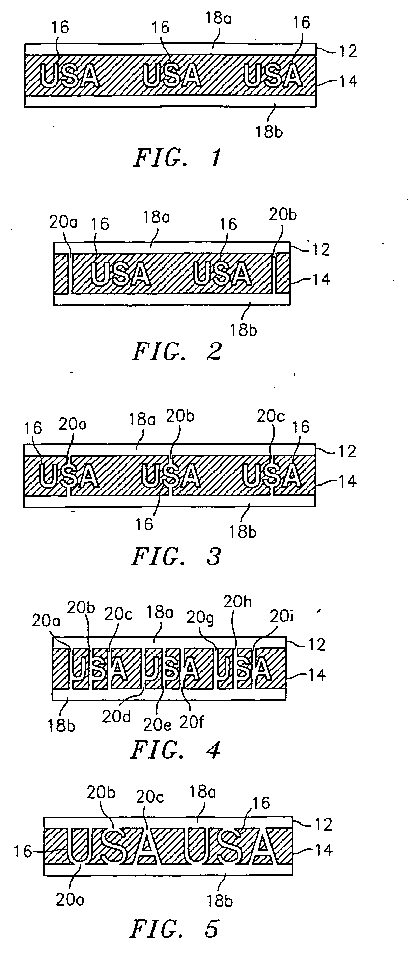

Several embodiments of the information-bearing layer(s) are shown in FIGS. 1 to 8. In the figures or drawings, reference numeral 10 has been used to generally designate the security device of the present invention, while reference numerals 12 and 14 have been used to denote the support layer and the information-bearing layer(s), respectively.

In a first embodiment, and as best shown in FIG. 1, the information-bearing layer 14 is a continuous metal or metallic strip and the information conveyed thereby is present in the form of recesses in the metal or metallic strip that adopt the shape of negative or reverse-image characters 16. Metal-free borders 18a, 18b, preferably ranging from about 0.1 to about 2 millimeters (mm) in width, are provided along the length of support layer 12.

In a second embodiment, and as best shown in FIG. 2, the information-bearing layer 14 is a discontinuous metal or metallic strip that is provided with two breaks (*i.e.,* non-metal regions or cross thread stops) 20a, 20b, located near opposing ends of the strip. The cross thread stops extend across the entire width of layer 14 and limit loss of metal from the ends of security device 10.

The cross thread stops 20a, 20b require a dimension no greater than 0.1 millimeters (mm) in width and, as best shown in FIG. 4, can be incorporated into traditional text or graphics such that the longest potentially exposed area at the end of security device 10 is a single character width.

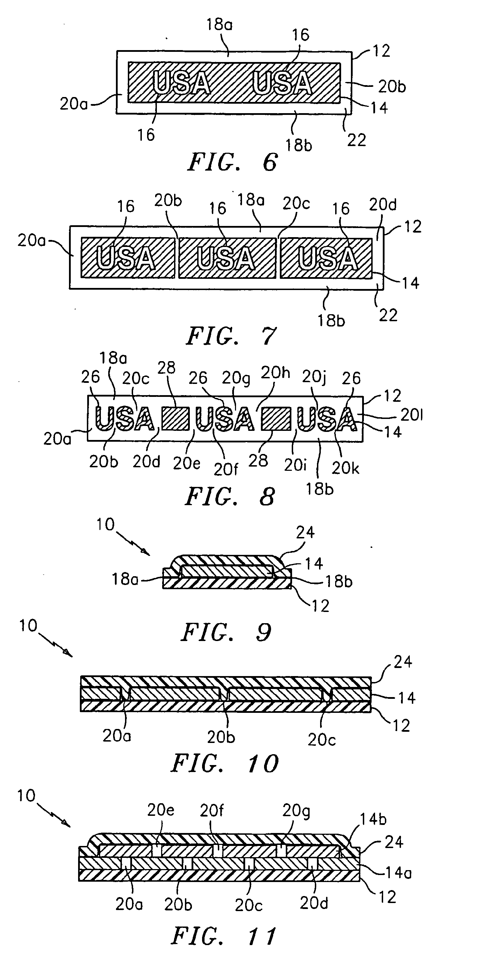

The embodiments shown in FIGS. 3 to 7 represent variations of the FIG. 2 embodiment, where the breaks or cross thread stops 20 either: form part of the negative or reverse-image characters 16 (FIGS. 3 to 5); are positioned at opposing ends of the strip thereby forming a metal-free perimeter 22 around layer 14 (FIG. 6); or are positioned at opposing ends and periodically along the length of strip 14 (FIG. 7).

The breaks or cross thread stops 20 shown in FIGS. 3 to 5 and 7 serve a dual purpose. In addition to providing stops for corrosive attacks from the ends of device 10, these breaks or cross thread stops 20 also form part of a conductive code. Examples of suitable conductive codes and means for the machine detection and reading of such codes are described in detail in U.S. Patent No. 5,486,022.

FIG. 8 shows yet a further embodiment where information-bearing layer 14 is a discontinuous metal or metallic strip that is provided with metal characters 26 and metal blocks 28 along with breaks 20a-1 on opposite sides of each metal character 26.

As alluded to above, information-bearing layer 14 may also take the form of a multi-layer structure or laminate. In one such embodiment (not shown), the information-bearing layer 14 is a diffractive, optically variable layer or laminate comprising, for example, a metallized diffractive film with holographic icon images, denomination numerals and/or kinetic effects. In another such embodiment (not shown), the information-bearing layer 14 is a multi-layer interference filter having as one of its layers an opaque reflective metal. When contained in the security devices of the present invention, these diffractive and metal layers maintain their colorful, diffractive effect even when subjected to chemical attack or the laundering process.

In another such embodiment (not shown), the information-bearing layer 14 comprises a first magnetic information-bearing layer and a second metal information-bearing layer. As will be readily appreciated by those skilled in the art, the magnetic information-bearing layer offers additional machine testable features. The combined use of metal and magnetic materials in security threads and the machine detection and reading of codes formed thereby are described in detail in U.S. Patent No. 6,255,948 B1 and in U.S. Patent Application Publication No. 20020014967 A1.

The metal-free borders 18a, 18b, and the information conveyed by information-bearing layer 14 (*e.g*., indicia 16, cross thread stops 20) may be formed by any one of a number of methods including, but not limited to, (1) methods involving selective metallization by electrodeposition, directly hot stamping onto the support layer 12 or using a mask or template in a vacuum metallizer, and (2) methods involving metallization and selective demetallization by chemical etching, laser etching and the like. It is preferred that the metal-free borders 18a, 18b and the information be formed on the support layer 12 by a resist and etch technique as described in U.S. Pat. 4,869,778. It is also preferred that the metal deposited on the support layer 12 have a thickness of from about 100 to about 500 angstroms and more preferably have a thickness of from about 200 to about 300 angstroms.

The protective layer of the present invention is a light-transmitting protective layer having a thickness ranging from about I to about 12 microns. The protective layer may take the form of a protective film having a thickness ranging from about 3 to about 12 microns (preferably from about 4 to about 8 microns) or a printed coating having a thickness ranging from about 1 to about 12 microns. By way of the present invention, it has been discovered that films or coatings having thicknesses within the ranges noted above effectively act as barriers to chemical penetration, thereby protecting the information-bearing layer(s) 14 from, for example, dissolution after soaking in caustic, acetone or bleach.

In a preferred embodiment, the protective layer is formed using one or more essentially colorless polymers selected from the group of polyester, polypropylene, polyethylene, polyethylene terephthalate, and mixtures thereof. In a more preferred embodiment, the protective layer is a laminated polyester film.

In another preferred embodiment, the protective layer is colored and/or luminescent and, in yet another preferred embodiment, the protective layer provides adhesive properties to bond the security device 10 into or onto paper.

The protective layer may be laminated to the structure formed by the information-bearing layer 14 and the support layer 12 by using a light-transmitting adhesive. By removing metal from the edges and replacing the metal with laminating adhesive there is no corrosive wicking and device 10 can withstand immersion in strong alkali, acids, and any agents that would be reactive with the metal or metallic information-bearing layer 14.

Light-transmitting laminating adhesives, suitable for use in the practice of the present invention, guarantee good bond strength between the protective layer and (*i*) information-bearing layer 14, (*ii*) metal-free borders 18a, 18b and, in some embodiments, also (*iii*) support layer 12. Such materials should be light stable, resistant to ageing, free from fine coagulum and exhibit little foaming. Examples of such light-transmitting laminating adhesives include, but are not limited to, acrylic polymers and copolymers, modified acrylic polymers and copolymers and polyesters. Aqueous systems of these materials are preferred so as to avoid problems associated with solvent wastes and solvent emissions. In a preferred embodiment, the light-transmitting laminating adhesive is an aqueous acrylic polymer dispersion.

As shown in FIG. 9, protective layer 24 wraps around information-bearing layer 14 and adheres to support layer 12 along the metal-free borders 18a, 18b. In a preferred embodiment, and as best shown in FIG. 10, protective layer 24 also adheres to support layer 12 at the breaks or cross thread stops 20a, 20b, 20c of information-bearing layer 14, thereby rendering the encapsulated portion(s) of layer 14 impervious to chemical attack.

In another preferred embodiment, and as best shown in FIG. 11, both the support layer 12 and the protective layer 24 have an information-bearing layer 14a, 14b in the form of a discontinuous metal strip formed along its entire length. The information-bearing layers 14a, 14b are laminated together in register with a light-transmitting laminating adhesive such that the metal regions on one layer 14a are lined up with *e.g.* the breaks or gaps 20e-g on the other layer 14b. Even though the information-bearing layers 14a, 14b are discontinuous, the metal regions overlap for a length ranging from about 1 to about 3 millimeters (mm). It is noted that the laminating adhesive will prevent corrosive and/or degrading materials from wicking through metal end regions to overlapped metal regions. The resulting security device 10 adopts the appearance of a continuously metallized thread or strip while insulating the information-bearing layers 14a, 14b from chemical attack. Conductivity, in this preferred embodiment, results from capacitive coupling between the layers across the adhesive laminating layer.

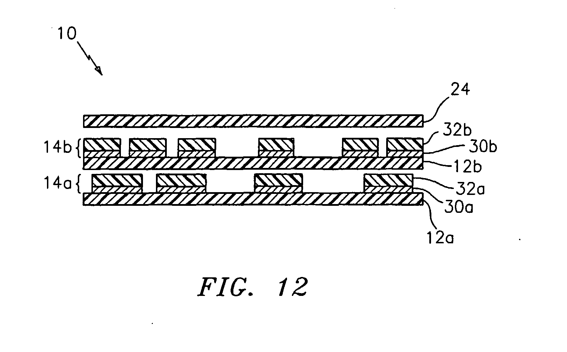

In yet another preferred embodiment, and as best shown in FIG. 12, two support layers 12a, 12b are used in constructing security device 10, with each support layer 12a, 12b having an information-bearing layer 14a, 14b formed along its entire length. Information-bearing layers 14a, 14b are each formed using a resist and etch technique, as described above, resulting in a formed pattern of indicia made up of a first metal layer 30a, 30b and a second resist (*e.g*., clear chemical resist) layer 32a, 32b. The relative arrangement of the indicia patterns or metal regions on layers 12a, 12b is not limited. In this embodiment, support layer 12b also serves as a protective or barrier layer for information-bearing layer 14a. Upon lamination of the respective layers, protective layer 24 would adhere to support layer 12b along its metal-free borders, as well as, at the breaks or cross thread stops of information-bearing layer 14b. Similarly, support layer 12b would adhere to support layer 12a along its metal-free borders, as well as, at the breaks or cross thread stops of information-bearing layer 14a.

The security device 10 of the present invention may include additional layers or coatings, provided however that any such additional layers or coatings do not interfere with the visual perception of the information conveyed by way of the information-bearing layer 14 and/or the signals seen by authenticity testing devices. Contemplated additional layers or coatings include light-transmitting adhesive layers on either or both sides of device 10 that facilitate the incorporation of the device into or onto security documents and fluorescent coatings made up of eosin, fluorescein, fluorspar, fuchsin, sulphate of quinine, calcium sulphide, Neodymium salicylate, Samarium gluconate, Yttrium salicylate and the like.

The security device 10, as illustrated for example in FIG. 10, may be produced by applying a layer of aluminum via vacuum deposition to one side of a polyester film. The aluminum is then printed with a resist in a desired pattern and the resist cured by evaporation and/or the application of heat and/or ultraviolet (UV) light. In order to demetallize the aluminum coated polyester film, the film is flooded with hot sodium hydroxide (NaOH) solution. The NaOH solution is preferably prepared at concentrations ranging from about 5 to about 50 % by weight NaOH and is applied at temperatures of from about 25 to about 80 °C. By way of this treatment the regions of aluminum that are not protected by the cured resist are dissolved. The film is then rinsed with a water/acid solution or other buffered solution to neutralize the surface of the substrate and prevent further etching. The web is then dried leaving the selectively metallized pattern on one side, this pattern corresponding to the pattern of the resist applied by the printing process. A polyester protection film is then laminated to the demetallized film using a light-transmitting adhesive.

Once the laminated film is prepared, it can be slit to provide narrow threads or strips which are preferably at least 0.8 mm in width, preferably from about I to about 5 mm, or even up to 6 or 8 mm in width.

The security article of the present invention is preferably a security paper and the security device 10, which is preferably in the form of a security thread, is either wholly embedded within the paper, or is partially embedded within the paper with portions thereof being exposed at the surface of the paper at spaced intervals along the thread's length at windows or apertures in the paper.

The security thread 10 may be at least partially incorporated in security papers during manufacture by techniques commonly employed in the papermaking industry. For example, the inventive thread 10 may be pressed within wet paper fibers while the fibers are unconsolidated and pliable, as taught by U.S. Pat. No. 4,534,398, resulting in the thread being totally embedded in the resulting paper. The thread 10 may also be fed into a cylinder mold papermaking machine, cylinder vat machine, or similar machine of known type, resulting in partial embedment of the thread within the body of the finished paper (*i.e.,* windowed paper).

In addition to the above, the security device 10 of the present invention may be mounted on the surface of security papers either during or post manufacture. Mounting of the device 10 may be achieved by any number of known techniques including: applying a pressure-sensitive adhesive to a surface of the device 10 and pressing the device 10 to the surface of the paper; and applying a heat activated adhesive to a surface of the device 10 and applying the device 10, using thermal transfer techniques, to the surface of the paper.

As stated above, the durability of security device 10 matches or exceeds the durability of host security articles such as bank notes and the like. In fact, test samples comprising security device 10, in the form of a security thread employing a metallized, diffractive information-bearing layer 14, partially embedded in a security paper, satisfied a number of different durability tests. More specifically, in repeated laundry testing, approximately 98% of the metal of layer 14 in the test samples remained intact. Chemical resistance testing, where the test samples were immersed in: undiluted ethyl acetate for ½ hour; undiluted acetone for 24 hours; 5% sodium hypochlorite for 24 hours; 2% sodium hydroxide for 24 hours; undiluted trichloroethylene for ½ hour; boiling water for ½ hour; 2% biological detergent at a temperature of 95 °C for ½ hour; or 0.5% industrial wash powder plus 1% sodium carbonate (Na₂CO₃) at a temperature of 95°C for ½ hour, resulted in 100% of the metal remaining intact. Similar results were obtained when the test samples were subjected to mechanical testing. For example, although wrinkles in security device 10 were observed when the test samples were subjected to IGT Crumpling (dry) 8x and IGT Crumpling (wet) 8x, no loss of metal occurred. Similarly, although surface dullness of the information-bearing layer 14 was observed when the test samples were subjected to Taber Dual Abraser (10 revolutions), no loss of metal occurred. Finally, no change in appearance or metal content occurred when the test samples were subjected to Graminski Flex Tester (2,000 cycles).

While various embodiments of the present invention have been described above, it should be understood that they have been presented by way of example only, and not limitation. Thus, the breadth and scope of the present invention should not be limited by any of the exemplary embodiments.

Having thus described the invention, what is claimed is:

## Claims

1. A durable security device (10) comprising:
(a) at least one support layer (12) having a surface comprising a central longitudinal band or strip (14) and opposing longitudinal borders (18a/b);
(b) at least one information-bearing layer (14) disposed on the central band or strip of the support layer surface (12); and
(c) at least one protective layer (24) disposed on the information-bearing layer(s) and on the opposing longitudinal borders of the support layer surface (18a,18b),
wherein the protective layer(s) has a thickness ranging from about 1 to about 12 microns and is adhered to at least the opposing longitudinal borders of the support layer surface (12).

2. The durable security device of claim 1, wherein the support layer(s) and the protective layer(s) are light-transmitting layers that are formed using one or more essentially colorless polymers selected from the group of polyester, polypropylene, polyethylene, polyethylene terephthalate, and mixtures thereof.

3. The durable security device of claim 2, wherein the light-transmitting layers are formed using polyester.

4. The durable security device of claim 2, wherein the light-transmitting support layer(s) is a colored, light-transmitting support layer(s).

5. The durable security device of claim 2, wherein the light-transmitting protective layer(s) is a colored, light-transmitting protective layer(s).

6. The durable security device of claim 2, wherein the light-transmitting support layer(s) is a luminescent, light-transmitting support layer(s).

7. The durable security device of claim 2, wherein the light-transmitting protective layer(s) is a luminescent, light-transmitting protective layer(s).

8. The durable security device of claim 1, wherein the information-bearing layer(s) is a continuous strip that is formed along the entire length of the support layer surface.

9. The durable security device of claim 1, wherein the information-bearing layer(s) is a discontinuous strip that is formed along the entire length of the support layer surface.

10. The durable security device of claims 8 or 9, wherein the strip contains visually perceivable information, machine-detectable information, and optionally, machine-readable information.

11. The durable security device of claims 8 or 9, wherein the strip is formed using one or more materials selected from the group of aluminum, chromium, cobalt, copper, gold, iron, nickel, silver, alloys of two or more of the aforementioned materials, and alloys that produce an opaque layer upon sputtering, vacuum deposition, or plasma coating.

12. The durable security device of claim 11, wherein the strip is formed using aluminum.

13. The durable security device of claim 8, wherein the information-bearing layer(s) is a continuous metal or metallic strip having recesses in the shape of negative or reverse-image characters formed therein.

14. The durable security device of claim 9, wherein the information-bearing layer(s) is a discontinuous metal or metallic strip having at least one non-metal region extending across the entire width of the strip.

15. The durable security device of claim 14, wherein the discontinuous metal or metallic strip is provided with at least two non-metal regions, wherein a first non-metal region is located near one end of the strip, and wherein a second non-metal region is located near an opposing end of the strip.

16. The durable security device of claims 8 or 9, wherein the metal or metallic strip is provided with at least two non-metal regions, wherein a first non-metal region is located at one end of the strip, and wherein a second non-metal region is located at the opposing end of the strip, thereby forming a non-metal perimeter around the metal or metallic strip to which the protective layer(s) is adhered.

17. The durable security device of claim 1, wherein the information-bearing layer(s) is a diffractive, optically variable layer(s).

18. The durable security device of claim 1, wherein the information-bearing layer(s) is a multi-layer interference filter(s).

19. The durable security device of claim 1, wherein the information-bearing layer(s) comprises a first magnetic information-bearing layer and a second metal information-bearing layer.

20. The security device of claim 1, wherein a light-transmitting adhesive adheres the protective layer(s) to the opposing longitudinal borders of the support layer surface(s).

21. The security device of claim 20, wherein the light-transmitting adhesive is selected from the group of acrylic polymers and copolymers, modified acrylic polymers and copolymers and polyesters.

22. The security device of claim 21, wherein the light-transmitting adhesive is an acrylic polymer.

23. The security device of claim 14, which comprises two information-bearing layers, wherein the metal strips are adhered or laminated together in register such that the metal regions on one metal strip are lined up with the metal-free region(s) on the other metal strip.

24. The security device of claim 1, which comprises a first and a second support layer and two information-bearing layers, wherein the second support layer is disposed on the information-bearing layer of the first support layer surface and is adhered to the opposing longitudinal borders of the first support layer surface, and wherein the protective layer is disposed on the information-bearing layer of the second support layer surface and is adhered to the opposing longitudinal borders of the second support layer surface.

25. The security device of claim 1, which further comprises at least one outer adhesive layer to facilitate incorporation of the device into or onto a security article.

26. A security article having at least one security device at least partially embedded therein and/or mounted thereon, wherein the security device comprises;
(a) at least one support layer having a surface comprising a central longitudinal band or strip and opposing longitudinal borders;
(b) at least one information-bearing layer disposed on the central band or strip of the support layer surface; and
(c) at least one protective layer disposed on the information-bearing layer(s) and on the opposing longitudinal borders of the support layer surface,
wherein the protective layer(s) has a thickness ranging from about 1 to about 12 microns and is adhered to at least the opposing longitudinal borders of the support layer surface.

## Patentansprüche

1. Dauerhafte Sicherheitsvorrichtung (10) mit:
(a) mindestens einer Unterlage (12) mit einer Oberfläche, die ein zentrales Längsband oder einen zentralen Längsstreifen (14) und gegenüberliegende Längsgrenzen (18a/b) aufweist;
(b) mindestens einer informationstragenden Schicht (14), die auf dem zentralen Band oder Streifen der Unterlagenoberfläche (12) angeordnet ist; und
(c) mindestens einer Schutzschicht (24), die auf der informationstragenden Schicht (oder den Schichten) und auf den gegenüberliegenden Längsgrenzen der Unterlagenoberfläche (18a, 18b) angeordnet ist,
wobei die Schutzschicht (oder Schutzschichten) eine Dicke im Bereich von ungefähr 1 bis ungefähr 12 Mikrometer hat und mindestens auf die gegenüberliegenden Längsgrenzen der Unterlagenoberfläche (12) aufgeklebt ist.

2. Dauerhafte Sicherheitsvorrichtung nach Anspruch 1, wobei die Unterlage (oder die Unterlagen) und die Schutzschicht (oder die Schutzschichten) lichtübertragende Schichten sind, die mit einem oder mehreren im Wesentlichen farblosen Polymeren ausgewählt aus der Gruppe bestehend aus Polyester, Polypropylen, Polyethylen, Polyethylenterephthalat und Mischungen davon gebildet sind.

3. Dauerhafte Sicherheitsvorrichtung nach Anspruch 2, wobei die lichtübertragenden Schichten mit Polyester gebildet sind.

4. Dauerhafte Sicherheitsvorrichtung nach Anspruch 2, wobei die lichtübertragende Unterlage (oder Unterlagen) eine farbige lichtübertragende Unterlage (oder Unterlagen) ist.

5. Dauerhafte Sicherheitsvorrichtung nach Anspruch 2, wobei die lichtübertragende Schutzschicht (oder Schutzschichten) eine farbige lichtübertragende Schutzschicht (oder Schutzschichten) ist.

6. Dauerhafte Sicherheitsvorrichtung nach Anspruch 2, wobei die lichtübertragende Unterlage (oder Unterlagen) eine leuchtende lichtübertragende Unterlage (oder Unterlagen) ist.

7. Dauerhafte Sicherheitsvorrichtung nach Anspruch 2, wobei die lichtübertragende Schutzschicht (oder Schutzschichten) eine leuchtende lichtübertragende Schutzschicht (oder Schutzschichten) ist.

8. Dauerhafte Sicherheitsvorrichtung nach Anspruch 1, wobei die informationstragende Schicht (oder Schichten) ein durchgehender Streifen ist, der über die gesamte Länge der Unterlagenoberfläche gebildet ist.

9. Dauerhafte Sicherheitsvorrichtung nach Anspruch 1, wobei die informationstragende Schicht (oder Schichten) ein nicht-durchgehender Streifen ist, der über die gesamte Länge der Unterlagenoberfläche gebildet ist.

10. Dauerhafte Sicherheitsvorrichtung nach Anspruch 8 oder 9, wobei der Streifen optisch erkennbare Informationen, maschinenerkennbare Informationen und fakultativ maschinenlesbare Informationen enthält.

11. Dauerhafte Sicherheitsvorrichtung nach Anspruch 8 oder 9, wobei der Streifen aus einem oder mehreren der Materialien ausgewählt aus der Gruppe bestehend aus Aluminium, Chrom, Kobalt, Kupfer, Gold, Eisen, Nickel, Silber, Legierungen aus zwei oder mehr der obengenannten Materialien und Legierungen, die mit Sputtern, Vakuumbedampfen oder Plasmabeschichten eine lichtundurchlässige Schicht erzeugen, gebildet ist.

12. Dauerhafte Sicherheitsvorrichtung nach Anspruch 11, wobei der Streifen aus Aluminium gebildet ist.

13. Dauerhafte Sicherheitsvorrichtung nach Anspruch 8, wobei die informationstragende Schicht (oder Schichten) ein durchgehender Metall- oder metallischer Streifen ist, der Ausnehmungen in Form von darin ausgeformten negativen oder Umkehrbild-Zeichen aufweist.

14. Dauerhafte Sicherheitsvorrichtung nach Anspruch 9, wobei die informationstragende Schicht (oder Schichten) ein nicht-durchgehender Metall- oder metallischer Streifen ist, der mindestens einen sich über die gesamte Breite des Streifens erstreckenden nichtmetallischen Bereich aufweist.

15. Dauerhafte Sicherheitsvorrichtung nach Anspruch 14, wobei der nicht-durchgehende Metall- oder metallische Streifen mit mindestens zwei nichtmetallischen Bereichen versehen ist, wobei sich ein erster nichtmetallischer Bereich in der Nähe des einen Endes des Streifens befindet und wobei sich ein zweiter nichtmetallischer Bereich in der Nähe des gegenüberliegenden Endes des Streifens befindet.

16. Dauerhafte Sicherheitsvorrichtung nach Anspruch 8 oder 9, wobei der Metall- oder metallische Streifen mit mindestens zwei nichtmetallischen Bereichen versehen ist, wobei sich ein erster nichtmetallischer Bereich in der Nähe des einen Endes des Streifens befindet und wobei sich ein zweiter nichtmetallischer Bereich in der Nähe des gegenüberliegenden Endes des Streifens befindet, wodurch sie einen nichtmetallischen Umfang um den Metall- oder metallischen Streifen bilden, auf den die Schutzschicht (oder Schutzschichten) aufgeklebt sind.

17. Dauerhafte Sicherheitsvorrichtung nach Anspruch 1, wobei die informationstragende Schicht (oder Schichten) eine beugende optisch variable Schicht (oder Schichten) ist.

18. Dauerhafte Sicherheitsvorrichtung nach Anspruch 1, wobei die informationstragende Schicht (oder Schichten) ein Mehrschicht-Interferenzfilter (oder mehrere Mehrschicht-Interferenzfilter) ist.

19. Dauerhafte Sicherheitsvorrichtung nach Anspruch 1, wobei die informationstragende Schicht (oder Schichten) eine erste magnetische informationstragende Schicht und eine zweite informationstragende Metallschicht umfasst.

20. Sicherheitsvorrichtung nach Anspruch 1, wobei ein lichtübertragender Kleber die Schutzschicht (oder Schutzschichten) auf die gegenüberliegenden Längsgrenzen der Unterlagenoberfläche (oder Unterlagenoberflächen) klebt.

21. Sicherheitsvorrichtung nach Anspruch 20, wobei der lichtübertragende Kleber ausgewählt ist aus der Gruppe bestehend aus Acrylpolymeren und -copolymeren, modifizierten Acrylpolymeren und -copolymeren und Polyestern.

22. Sicherheitsvorrichtung nach Anspruch 21, wobei der lichtübertragende Kleber ein Acrylpolymer ist.

23. Sicherheitsvorrichtung nach Anspruch 14, das zwei informationstragende Schichten umfasst, wobei die Metallstreifen derart im Register zusammengeklebt oder -laminiert sind, dass die Metallbereiche auf einem Metallstreifen mit dem metallfreien Bereich (oder Bereichen) auf dem anderen Metallstreifen abgeglichen werden.

24. Sicherheitsvorrichtung nach Anspruch 1, das eine erste und eine zweite Unterlage und zwei informationstragende Schichten umfasst, wobei die zweite Unterlage auf der informationstragenden Schicht der Oberfläche der ersten Unterlage angeordnet ist und an die gegenüberliegenden Längsgrenzen der Oberfläche der ersten Unterlage geklebt ist, und wobei die Schutzschicht auf der informationstragenden Schicht der Oberfläche der zweiten Unterlage angeordnet ist und an die gegenüberliegenden Längsgrenzen der Oberfläche der zweiten Unterlage geklebt ist.

25. Sicherheitsvorrichtung nach Anspruch 1, ferner mit mindestens einer Außenkleberschicht zur Erleichterung der Einarbeitung der Vorrichtung in oder auf einen Sicherheitsgegenstand.

26. Sicherheitsgegenstand mit mindestens einer darin mindestens zum Teil eingebetteten und/oder darauf angebrachten Sicherheitsvorrichtung, wobei die Sicherheitsvorrichtung Folgendes aufweist:
(a) mindestens eine Unterlage mit einer Oberfläche, die ein zentrales Längsband oder einen zentralen Längsstreifen und gegenüberliegende Längsgrenzen aufweist;
(b) mindestens eine informationstragende Schicht, die auf dem zentralen Band oder Streifen der Unterlagenoberfläche angeordnet ist; und
(c) mindestens eine Schutzschicht, die auf der informationstragenden Schicht (oder den Schichten) und auf den gegenüberliegenden Längsgrenzen der Unterlagenoberfläche angeordnet ist,
wobei die Schutzschicht (oder Schutzschichten) eine Dicke im Bereich von ungefähr 1 bis ungefähr 12 Mikrometer hat und mindestens auf die gegenüberliegenden Längsgrenzen der Unterlagenoberfläche aufgeklebt ist.

## Revendications

1. Dispositif de sécurité durable (10) comprenant :
(a) au moins une couche de support (12) comportant une surface comprenant une bande ou bandelette longitudinale centrale (14) et des bordures longitudinales opposées (18a/b) ;
(b) au moins une couche portant des informations (14) disposée sur la bande ou bandelette centrale de la surface de couche de support (12) ; et
(c) au moins une couche de protection (24) disposée sur la ou les couches portant des informations et sur les bordures longitudinales opposées (18a, 18b) de la surface de couche de support,
dans lequel la ou les couches de protection ont une épaisseur allant d'environ 1 à environ 12 microns et sont collées au moins aux bordures longitudinales opposées de la surface de la couche de support (12).

2. Dispositif de sécurité durable selon la revendication 1, dans lequel la ou les couches de support et la ou les couches de protection sont des couches transmettant la lumière qui sont formées en utilisant un ou plusieurs polymères essentiellement incolores sélectionnés dans le groupe comprenant le polyester, le polypropylène, le polyéthylène, le polyéthylène téréphtalate, et des mélanges de ceux-ci.

3. Dispositif de sécurité durable selon la revendication 2, dans lequel les couches transmettant la lumière sont formées en utilisant du polyester.

4. Dispositif de sécurité durable selon la revendication 2, dans lequel la ou les couches de support transmettant la lumière sont des couches de support colorées et transmettant la lumière.

5. Dispositif de sécurité durable selon la revendication 2, dans lequel la ou les couches de protection transmettant la lumière sont des couches de protection colorées et transmettant la lumière.

6. Dispositif de sécurité durable selon la revendication 2, dans lequel la ou les couches de support transmettant la lumière sont des couches de support luminescentes et transmettant la lumière.

7. Dispositif de sécurité durable selon la revendication 2, dans lequel la ou les couches de protection transmettant la lumière sont des couches de protection transmettant la lumière luminescentes.

8. Dispositif de sécurité durable selon la revendication 1, dans lequel la ou les couches portant des informations sont des bandes continues qui sont formées le long de la longueur entière de la surface de couche de support.

9. Dispositif de sécurité durable selon la revendication 1, dans lequel la ou les couches portant des informations sont des bandes discontinues qui sont formées le long de la longueur entière de la surface de couche de support.

10. Dispositif de sécurité durable selon la revendication 8 ou 9, dans lequel la bande contient des informations pouvant être perçues visuellement, des informations pouvant être détectées par une machine et, en option, des informations pouvant être lues par une machine.

11. Dispositif de sécurité durable selon la revendication 8 ou 9, dans lequel la bande est formée en utilisant un ou plusieurs matériaux sélectionnés dans le groupe comprenant l'aluminium, le chrome, le cobalt, le cuivre, l'or, le fer, le nickel, l'argent, des alliages de deux ou plus des matériaux susmentionnés, et des alliages qui produisent une couche opaque lors d'un dépôt par pulvérisation, d'un dépôt sous vide, ou d'un revêtement par projection de plasma.

12. Dispositif de sécurité durable selon la revendication 11, dans lequel la bande est formée en utilisant de l'aluminium.

13. Dispositif de sécurité durable selon la revendication 8, dans lequel la ou les couches portant des informations sont des bandes de métal ou métalliques continues comportant des évidements sous la forme de caractères négatifs ou d'image inversée dans celles-ci.

14. Dispositif de sécurité durable selon la revendication 9, dans lequel la ou les couches portant des informations sont des bandes de métal ou métalliques discontinues comportant au moins une région non métallique s'étendant sur la largeur entière de la bande.

15. Dispositif de sécurité durable selon la revendication 14, dans lequel la bande de métal ou métallique discontinue est pourvue d'au moins deux régions non métalliques, dans lequel une première région non métallique est située à proximité d'une extrémité de la bande, et dans lequel une deuxième région non métallique est située à proximité d'une extrémité opposée de la bande.

16. Dispositif de sécurité durable selon la revendication 8 ou 9, dans lequel la bande de métal ou métallique est pourvue d'au moins deux régions non métalliques, dans lequel une première région non métallique est située à une extrémité de la bande, et dans lequel une deuxième région non métallique est située à l'extrémité opposée de la bande, formant de ce fait un périmètre non métallique autour de la bande de métal ou métallique auquel la ou les couches de protection sont collées.

17. Dispositif de sécurité durable selon la revendication 1, dans lequel la ou les couches portant des informations sont des couches de diffraction optiquement variables.

18. Dispositif de sécurité durable selon la revendication 1, dans lequel la ou les couches portant des informations sont des filtres d'interférence multicouches.

19. Dispositif de sécurité durable selon la revendication 1, dans lequel la ou les couches portant des informations comprennent une première couche magnétique portant des informations et une deuxième couche de métal portant des informations.

20. Dispositif de sécurité selon la revendication 1, dans lequel un adhésif transmettant la lumière colle la ou les couches de protection aux bordures longitudinales opposées de la ou des surfaces de couche de support.

21. Dispositif de sécurité selon la revendication 20, dans lequel l'adhésif transmettant la lumière est sélectionné dans le groupe comprenant des polymères et des copolymères acryliques, des polymères et des copolymères acryliques modifiés et des polyesters.

22. Dispositif de sécurité selon la revendication 21, dans lequel l'adhésif transmettant la lumière est un polymère acrylique.

23. Dispositif de sécurité selon la revendication 14, qui comprend deux couches portant des informations, dans lequel les bandes de métal sont collées ou lamifiées ensemble en alignement de sorte que les régions métalliques sur une bande de métal soient alignées avec la ou les régions exemptes de métal sur l'autre bande de métal.

24. Dispositif de sécurité selon la revendication 1, qui comprend des première et deuxième couches de support et deux couches portant des informations, dans lequel la deuxième couche de support est disposée sur la couche portant des informations de la surface de première couche de support et est collée aux bordures longitudinales opposées de la surface de la première couche de support, et dans lequel la couche de protection est disposée sur la couche portant des informations de la surface de la deuxième couche de support et est collée aux bordures longitudinales opposées de la surface de la deuxième couche de support.

25. Dispositif de sécurité selon la revendication 1, qui comprend en outre au moins une couche adhésive extérieure pour faciliter l'incorporation du dispositif dans ou sur un article de sécurité.

26. Article de sécurité comportant au moins un dispositif de sécurité au moins partiellement intégré dans celui-ci et/ou monté sur celui-ci, dans lequel le dispositif de sécurité comprend :
(a) au moins une couche de support comportant une surface comprenant une bande ou bandelette longitudinale centrale et des bordures longitudinales opposées ;
(b) au moins une couche portant des informations disposée sur la bande ou bandelette centrale de la surface de la couche de support ; et
(c) au moins une couche de protection disposée sur la ou les couches portant des informations et sur les bordures longitudinales opposées de la surface de la couche de support,
dans lequel la ou les couches de protection ont une épaisseur allant d'environ 1 à environ 12 microns et sont collées au moins aux bordures longitudinales opposées de la surface de la couche de support.
